(19) Europäisches Patentamt
European Patent Office
Office européen des brevets

(11) EP 1 517 608 B1

(12) # EUROPÄISCHE PATENTSCHRIFT

(45) Veröffentlichungstag und Bekanntmachung des Hinweises auf die Patenterteilung:
**28.03.2007 Patentblatt 2007/13**

(21) Anmeldenummer: **03760592.0**

(22) Anmeldetag: **06.06.2003**

(51) Int Cl.:
***A01N 37/52*** (2006.01) ***A01N 35/04*** (2006.01)
***A01N 43/653*** (2006.01) ***A01N 43/56*** (2006.01)

(86) Internationale Anmeldenummer:
**PCT/EP2003/005949**

(87) Internationale Veröffentlichungsnummer:
**WO 2004/000019 (31.12.2003 Gazette 2004/01)**

(54) **FUNGIZIDE MISCHUNGEN AUF DER BASIS VON BENZAMIDOXIM-DERIVATEN, BENZOPHENONEN UND EINEM AZOL**

FUNGICIDAL MIXTURES BASED ON BENZAMIDOXIME DERIVATIVES, BENZOPHENONES AND ON AN AZOLE

MELANGES FONGICIDES A BASE DE DERIVES DE BENZAMIDOXIME, DE BENZOPHENONES ET D'UN AZOL

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**LT LV**

(30) Priorität: **20.06.2002 DE 10227656**

(43) Veröffentlichungstag der Anmeldung:
**30.03.2005 Patentblatt 2005/13**

(73) Patentinhaber: **BASF Aktiengesellschaft**
**67056 Ludwigshafen (DE)**

(72) Erfinder:
- **AMMERMANN, Eberhard**
  **64646 Heppenheim (DE)**
- **STIERL, Reinhard**
  **67251 Freinsheim (DE)**
- **SCHÖFL, Ulrich**
  **68782 Brühl (DE)**
- **STRATHMANN, Siegfried**
  **67117 Limburgerhof (DE)**
- **SCHELBERGER, Klaus**
  **67161 Gönnheim (DE)**
- **SCHERER, Maria**
  **76829 Landau-Godramstein (DE)**
- **HADEN, Egon**
  **67259 Kleinniedesheim (DE)**

(56) Entgegenhaltungen:
**EP-A- 1 023 834**
**EP-A- 1 077 028**
**WO-A-02/056686**
**WO-A-02/062140**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 517 608 B1

## Beschreibung

Die vorliegende Erfindung betrifft

Fungizide Mischungen, enthaltend als aktive Komponenten

(1) ein Benzamidoxim-Derivat der Formel I

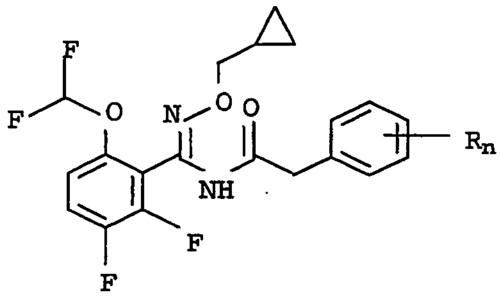

(I)

wobei der Substituent und der Index die folgenden Bedeutungen haben kann:

R Wasserstoff, Halogen, $C_1$-$C_4$-Alkyl, $C_1$-$C_4$-Halogenalkyl, $C_1$-$C_4$-Alkoxy oder $C_1$-$C_4$-Halogenalkoxy

n 1, 2 oder 3,

und

(2) ein Benzophenone der Formel II,

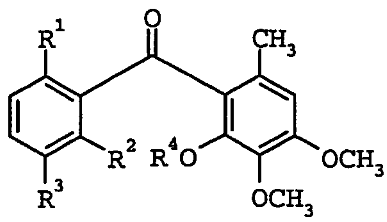

(II)

in der

$R^1$ für Chlor, Methyl, Methoxy, Acetoxy, Pivaloyloxy oder Hydroxy;

$R^2$ für Chlor oder Methyl;

$R^3$ für Wasserstoff, Halogen oder Methyl; und

$R^4$ für $C_1$-$C_6$-Alkyl oder Benzyl stehen, wobei der Phenylteil des Benzylrestes einen Halogen oder Methylsubstituenten tragen kann, und

(3) Epoxiconazole der Formel III

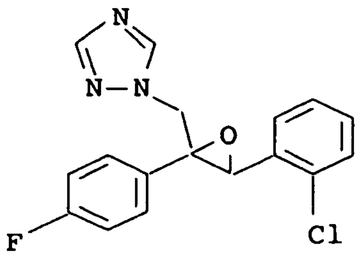

(III)

in einer synergistisch wirksamen Menge.

Außerdem betrifft die Erfindung ein Verfahren zur Bekämpfung von Schadpilzen mit Mischungen der Verbindung I, II und III und die Verwendung der Verbindungen I, II und III zur Herstellung derartiger Mischungen sowie Mittel, die diese Mischungen enthalten.

Aus der EP-A-1017670 sind Benzamidoxim-Derivate der Formel I bekannt.

Aus den EP-B 531,837, EP-A 645,091 und WO 97/06678 sind fungizide Mischungen bekannt, die als eine Wirkstoffkomponente ein Azol enthalten.

Die Verbindungen der Formel II, ihre Herstellung und ihre Wirkung gegen Schadpilze sind aus der Literatur bekannt (EP-A 727 141; EP-A 897 904; EP-A 899 255; EP-A 967 196).

Mischungen von Benzophenonen der Formel II mit anderen fungiziden Wirkstoffen sind aus EP-A 1 023 834 bekannt.

Das Epoxiconazol der Formel III, dessen Herstellung und deren Wirkung gegen Schadpilze ist an sich aus der EP-A 196038 bekannt.

Der vorliegenden Erfindung lag die Aufgabe zugrunde, weitere Mittel zur Bekämpfung von Schadpilzen und insbesondere für bestimmte indikationen zur Verfügung zu stellen.

Überraschenderweise wurde nun gefunden, daß diese Aufgabe mit einer Mischung gelöst wird, welche als Wirkstoffe Benzamidoxim-Derivate der eingangs definierten Formel I und als weitere fungizid wirksame Komponenten einen fungiziden Wirkstoff aus der Klasse der Benzophenone und Azole enthält.

Die erfindungsgemäßen Mischungen wirken synergistisch und sind daher zur Bekämpfung von Schadpilzen und insbesondere von echten Mehltaupilzen in Getreide, Gemüse und Reben besonders geeignet.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei um geradkettige oder verzweigte $C_1$-$C_4$-Alkylgruppen. Beispiele für Alkylgruppen sind Alkyl wie insbesondere Methyl, Ethyl, Propyl, 1-Methylethyl, Butyl, 1-Methylpropyl, 2-Methylpropyl und 1,1-Dimethylethyl.

Halogenalkyl steht für eine wie oben definierte Alkylgruppe, die mit einem oder mehreren Halogenatomen, insbesondere Fluor und Chlor, teilweise oder vollständig halogeniert ist. Vorzugsweise sind 1 bis 3 Halogenatome vorhanden, wobei die Difluormethan/- oder die Trifluormethylgruppe besonders bevorzugt ist.

Die obigen Ausführungen zur Alkylgruppe und Halogenalkylgruppe gelten in entsprechender Weise für die Alkyl- und Halogenalkylgruppe in Alkoxy und Halogenalkoxy.

Der Rest R in der Formel I steht vorzugsweise für ein Wasserstoffatom.

Die folgenden Verbindungen der Formel II sind als Mischungspartner bevorzugt, wobei die einzelnen Bevorzugungen für sich allein genommen und in Kombination zu lesen sind.

Bevorzugt sind Verbindungen II, in denen $R^1$ für Chlor, Methoxy, Acetoxy oder Hydroxy steht und insbesondere bevorzugt sind Verbindungen, in denen $R^1$ Methoxy, Acetoxy oder Hydroxy bedeutet. Ganz besonders bevorzugt sind Verbindungen, in denen $R^1$ Methoxybedeutet.

Erfindungsgemäß sind Mischungen enthaltend Verbindungen II, in denen $R^2$ Chlor oder Methyl bedeutet. Bevorzugt sind Verbindungen I, in denen $R^2$ Methyl bedeutet.

Außerdem sind Verbindungen II bevorzugt, in denen $R^3$ für Wasserstoff, Methyl, Chlor oder Brom und insbesondere bevorzugt für Wasserstoff, Chlor oder Brom steht.

Daneben sind Verbindungen II bevorzugt, in denen $R^4$ für $C_1$-$C_4$-Alkyl oder Benzyl stehen, wobei der Phenylteil des Benzylrestes einen Halogen oder Methylsubstituenten tragen kann. Insbesondere bevorzugt sind Verbindungen der Formel II, in der $R^4$ für $C_1$-$C_4$-Alkyl und vorzugsweise Methyl steht.

Weiterhin bevorzugt sind Verbindungen der Formel II, in der die Substituenten $R^1$, $R^2$, $R^3$ und $R^4$ die folgende Bedeutung haben:

$R^1$ Methoxy, Acetoxy oder Hydroxy;
$R^2$ Methyl;
$R^3$ Wasserstoff, Chlor oder Brom; und
$R^4$ $C_1$-$C_4$-Alkyl.

Daneben sind Verbindung der Formel II besonders bevorzugt, in denen die Substituenten die in der folgenden Tabelle 1 gegebenen Bedeutungen haben:

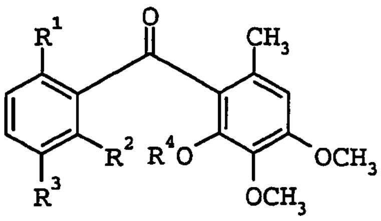

II

| Nr. | $R^1$ | $R^2$ | $R^3$ | $R^4$ |
|---|---|---|---|---|
| II-1 | Methoxy | Cl | H | Methyl |
| II-2 | Methoxy | Cl | Methyl | Methyl |
| II-3 | Methoxy | Cl | H | n-Propyl |
| II-4 | Methoxy | Cl | H | n-Butyl |
| II-5 | Methoxy | Cl | H | Benzyl |
| II-6 | Methoxy | Cl | H | 2-Fluorobenzyl |
| II-7 | Methoxy | Cl | H | 3-Fluorobenzyl |
| II-8 | Methoxy | Cl | H | 4-Fluorophenyl |
| II-12 | Methoxy | Cl | Br | Methyl |
| II-13 | Methoxy | Cl | Br | n-Propyl |
| II-14 | Methoxy | Cl | Br | n-Butyl |
| II-15 | Methoxy | Cl | Br | Benzyl |
| II-16 | Methoxy | Cl | Br | 2-Fluorobenzyl |
| II-17 | Methoxy | Methyl | H | Methyl |
| II-18 | Methoxy | Methyl | Cl | Methyl |
| II-19 | Methoxy | Methyl | H | n-Propyl |
| II-20 | Methoxy | Methyl | H | n-Butyl |
| II-21 | Methoxy | Methyl | H | Benzyl |
| II-22 | Methoxy | Methyl | H | 2-Fluorobenzyl |
| II-23 | Methoxy | Methyl | H | 3-Fluorobenzyl |
| II-24 | Methoxy | Methyl | H | 4-Fluorophenyl |
| II-25 | Methoxy | Methyl | H | 2-Methylphenyl |
| II-26 | Methoxy | Methyl | H | 3-Methylphenyl |
| II-27 | Methoxy | Methyl | H | 4-Methylphenyl |
| II-28 | Methoxy | Methyl | Br | Methyl |
| II-29 | Methoxy | Methyl | Br | n-Propyl |

(fortgesetzt)

| Nr. | $R^1$ | $R^2$ | $R^3$ | $R^4$ |
|---|---|---|---|---|
| II-30 | Methoxy | Methyl | Br | n-Butyl |
| II-31 | Methoxy | Methyl | Br | Benzyl |
| II-32 | Methoxy | Methyl | Br | 2-Fluorobenzyl |
| II-33 | Acetoxy | Methyl | H | Methyl |
| II-34 | Acetoxy | Methyl | Cl | Methyl |
| II-35 | Acetoxy | Methyl | Br | Methyl |
| II-36 | Hydroxy | Methyl | H | Methyl |
| II-37 | Hydroxy | Methyl | Cl | Methyl |
| II-38 | Hydroxy | Methyl | Br | Methyl |
| II-39 | Pivaloyloxy | Methyl | H | Methyl |
| II-40 | Pivaloyloxy | Methyl | Cl | Methyl |
| II-41 | Pivaloyloxy | Methyl | Br | Methyl |
| II-42 | Cl | Cl | H | Methyl |
| II-43 | Cl | Cl | H | n-Propyl |
| II-44 | Cl | Cl | H | n-Butyl |
| II-45 | Cl | Cl | H | Benzyl |
| II-46 | Cl | Cl | H | 2-Fluorobenzyl |
| II-47 | Cl | Cl | H | 3-Fluorobenzyl |
| II-52 | Cl | Cl | Br | Methyl |
| II-53 | Cl | Cl | Br | n-Propyl |
| II-54 | Cl | Cl | Br | n-Butyl |
| II-55 | Cl | Cl | Br | Benzyl |
| II-56 | Cl | Cl | Br | 2-Fluorobenzyl |
| II-57 | Methyl | Methyl | H | Methyl |
| II-58 | Methyl | Methyl | H | n-Propyl |
| II-59 | Methyl | Methyl | H | n-Butyl |
| II-60 | Methyl | Methyl | H | Benzyl |
| II-61 | Methyl | Methyl | H | 2-Fluorobenzyl |
| II-62 | Methyl | Methyl | H | 3-Fluorobenzyl |
| II-67 | Methyl | Methyl | Br | Methyl |
| II-68 | Methyl | Methyl | Br | n-Propyl |
| II-69 | Methyl | Methyl | Br | n-Butyl |
| II-70 | Methyl | Methyl | Br | Benzyl |
| II-71 | Methyl | Methyl | Br | 2-Fluorobenzyl |

Als Azolderivat enthalten die erfindungsgemäßen Mischungen Epoxiconazol der Formel III.

Um die synergistische Wirkung zu entfalten, genügt bereits ein geringer Anteil an Benzamidoxim-Derivat der Formel I. Vorzugsweise werden Benzamidoxim-Derivat, Benzophenon und Epoxiconazol in einem Gewichtsverhältnis im Bereich von 20:1:1 bis 1:20:20, insbesondere 10:1:1 bis 1:10:10 eingesetzt.

Epoxiconazol der Formel III ist wegen des basischen Charakters der in ihm enthaltenden Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I bis III ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I mit II und III bzw. die Verbindungen I, II und III gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Blumeria graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Besonders bevorzugt sind die erfindungsgemäßen Mischungen zur Bekämpfung von echten Mehltaupilzen in Getreide-, Reben- und Gemüsekulturen sowie in Zierpflanzen einsetzbar.

Die Verbindung I, II und III können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen II und III liegen entsprechend bei 0,01 bis 10 kg/ha, vorzugsweise 0,05 bis 5 kg/ha, insbesondere 0,05 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I, II und III oder deren Mischungen aus den Verbindungen I, II und III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I, II und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln,

Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindung I, II und III oder der Mischung aus den Verbindungen I, II und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I, II oder III bzw. der Mischung aus den Verbindungen I, II und III. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I, II oder III der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I, II und III bei getrennter Ausbringung, behandelt.

Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII. eine innige Mischung aus 30 Gew.-Teilen der Wirkstoffe, 92 Gew.-Teilen pulverförmigem Kieselsäuregel und

8 Gew.-Teilen Paraffinöl, das auf die Oberfläche dieses Kieselsäuregels gesprüht wurde; diese Aufbereitung gibt dem Wirkstoff eine gute Haftfähigkeit;

VIII. eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Anwendungsbeispiel

Die synergistische Wirkung der erfindungsgemäßen Mischungen läßt sich durch die folgenden Versuche zeigen:

Die Wirkstoffe werden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Der Wirkungsgrad (w) wird nach der Formel von Abbot wie folgt bestimmt:

$$W = (1 - \alpha)\cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel 1: Wirksamkeit gegen Weizenmehltau verursacht durch *Erysiphe* [*syn. Blumeria*] *graminis* forma specialis. *tritici*

Blätter von in Töpfen gewachsenen Weizenkeimlingen der Sorte "Kanzler" wurden mit wässriger Suspension in der unten angegebenen Wirkstoffkonzentration bis zur Tropfnässe besprüht. Die Suspension oder Emulsion wurde aus einer Stammlösung angesetzt mit 10 % Wirkstoff in einer Mischung bestehend aus 85 % Cyclohexanon, und 5 % Emulgiermittel. 24 Stunden nach dem Antrocknen des Spritzbelages mit Sporen des Weizenmehltaus *(Erysiphe [syn. Blumeria] graminis* forma specialis. *tritici*) bestäubt. Die Versuchspflanzen wurden anschließend im Gewächshaus bei Temperaturen zwischen 20 und 24° C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

Die visuell ermittelten Werte für den Prozentanteil befallener Blattflächen wurden in wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Tabelle 2

| **Wirkstoff** | **Wirkstoffkonzentration in der Spritzbrühe in ppm** | **Wirkungsgrad in % der unbehandelten Kontrolle** |
|---|---|---|
| Kontrolle (unbehandelt) | (90 % Befall) | 0 |
| Verbindung I mit $R_n$ = | H 0,25<br>0,06 | 56<br>33 |
| Verbindung II = Metrafenone = mit $R^1 = OCH_3$, $R^2 = CH_3$, $R^3 = Br$, $R^4 = CH_3$ | 1<br>0,25<br>0,06<br>0,015 | 72<br>56<br>44<br>33 |
| Verbindung III = Epoxiconazole | 1<br>0,25<br>0,06<br>0,015 | 56<br>44<br>33<br>0 |

Tabelle 3

| **Aus EP 1 023 834 bekannte Zweier-Kombination** | **beobachteter Wirkungsgrad** | **Berechneter Wirkungsrad*)** |
|---|---|---|
| Verbindung II = Metrafenone + Verbindung III = Epoxiconazole 0,25 + 1 ppm Mischung 1 : 4 | 83 | 80 |
| Verbindung II = Metrafenone + Verbindung III = Epoxiconazole 0,06 + 0.25 ppm Mischung 1 : 4 | 78 | 69 |
| Verbindung II = Metrafenone + Verbindung III = Epoxiconazole 0,25 + 0,06 ppm Mischung 4 : 1 | 72 | 70 |
| Verbindung II = Metrafenone + Verbindung III = Epoxiconazole 0,06 + 0,015 ppm Mischung 4 : 1 | 67 | 44 |

Tabelle 4

| **Aus WO 02/062140 bekannte Zweier-Kombination** | **beobachteter Wirkungsgrad** | **Berechneter Wirkungsgrad*)** |
|---|---|---|
| Verbindung I mit $R_n$ = H + Verbindung II = Metrafenone 0,25 + 0,06 ppm Mischung 4 : 1 | 78 | 75 |
| Verbindung I = mit $R_n$ = H + Verbindung II = Metrafenone 0,06 + 0.015 ppm Mischung 4 : 1 | 67 | 56 |
| Verbindung I = mit $R_n$ = H + Verbindung II = Metrafenone 0,25 + 1 ppm Mischung 1 : 4 | 89 | 88 |
| Verbindung I = mit $R_n$ = H + Verbindung II = Metrafenone 0,06 + 0,25 ppm Mischung 1 : 4 | 72 | 70 |

Tabelle 5

| Beanspruchte Dreier - Kombinationen | beobachteter Wirkungsgrad | Berechneter Wirkungsgrad*) |
|---|---|---|
| Verbindung I mit $R_n$ = H + Verbindung II = Metrafenone + Verbindung III = Epoxiconazole bekannt aus EP 1 023 834) 0,25 + 0,25 + 1 ppm Mischung 1 : 1 : 4 | 100 | 93 |
| Verbindung I mit $R_n$ = H + Verbindung II = Metrafenone + Verbindung III = Epoxiconazole 0,06 + 0,06 + 0,25 ppm Mischung 1 : 1 : 4 | 97 | 85 |
| Verbindung I mit $R_n$ = H + Verbindung II = Metrafenone + Verbindung III = Epoxiconazole 0,25 + 0,25 + 0,06 ppm Mischung 4 : 4 : 1 | 97 | 88 |
| Verbindung I mit $R_n$ = H + Verbindung II = Metrafenone + Verbindung III = Epoxiconazole 0,06 + 0,06 + 0,015 ppm Mischung 4 : 4 : 1 | 94 | 78 |
| Verbindung I mit $R_n$ = H + Verbindung II = Metrafenone + Verbindung III = Epoxiconazole 0,25 + 0,06 + 0,25 ppm Mischung 4 : 1 : 4 | 97 | 88 |
| Verbindung I mit $R_n$ = H + Verbindung II = Metrafenone + Verbindung III = Epoxiconazole 0,06 + 0,015 + 0,06 ppm Mischung 4 : 1 : 4 | 87 | 78 |
| Verbindung I mit $R_n$ = H + Verbindung II = Metrafenone+ Verbindung III = Epoxiconazole 0,25 + 1 + 0,25 ppm Mischung 1 : 4 : 1 | 97 | 94 |
| Verbindung I mit $R_n$ = H + Verbindung II = Metrafenone + Verbindung III = Epoxiconazole 0,06 + 0,25 + 0,06 ppm Mischung 1 : 4 : 1 | 94 | 81 |

Anwendungsbeispiel 2: Kurative Wirksamkeit gegen Weizenbraunrost verursacht durch *Puccinia recondita*

Kurative Wirksamkeit gegen Weizenbraunrost verursacht durch *Puccinia recondita*

Blätter von in Töpfen gewachsenen Weizensämlingen der Sorte "Kanzler" wurden mit Sporen des Braunrostes (*Puccinia recondita*) bestäubt. Danach wurden die Töpfe für 24 Stunden in eine Kammer mit hoher Luftfeuchtigkeit (90 bis 95 %) und 20 bis 22° C gestellt. Während dieser Zeit keimten die Sporen aus und die Keimschläuche drangen in das Blattgewebe ein. Die infizierten Pflanzen wurden am nächsten Tag mit einer wässriger Suspension in der unten angegebenen Wirkstoffkonzentration bis zur Tropf-nässe besprüht. Die Suspension oder Emulsion wurde aus einer Stammlösung angesetzt mit 10 % Wirkstoff in einer Mischung bestehend aus 85 % Cyclohexanon, und 5 % Emulgiermittel. Nach dem Antrocknen des Spritzbelages wurden die Versuchspflanzen im Gewächshaus bei Temperaturen zwischen 20 und 22° C und 65 bis 70 % relativer Luftfeuchte für 7 Tage kultiviert. Dann wurde das Ausmaß der Rostpilzentwicklung auf den Blättern ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Tabelle 6

| Wirkstoff | Wirkstoffkonzentration in der Spritzbrühe in ppm | Wirkungsgrad in % der unbehandelten Kontrolle |
|---|---|---|
| Kontrolle (unbehandelt) | (90 % Befall) | 0 |

(fortgesetzt)

| **Wirkstoff** | **Wirkstoffkonzentration in der Spritzbrühe in ppm** | **Wirkungsgrad in % der unbehandelten Kontrolle** |
|---|---|---|
| Verbindung I mit Rn = H | 0,25<br>0,06 | 0<br>0 |
| Verbindung II = Metrafenone = mit $R^1$ = $OCH_3$, $R^2$ = $CH_3$, $R^3$ = Br, $R^4$ = $CH_3$ | 1<br>0,25<br>0,06<br>0,015 | 0<br>0<br>0<br>0 |
| Verbindung III = Epoxiconazole | 1<br>0,25<br>0,06<br>0,015 | 94<br>89<br>67<br>0 |

Tabelle 7

| **Aus EP 1 023 834 bekannte Zweier-Kombination** | **beobachteter Wirkungsgrad** | **Berechneter Wirkungsgrad*)** |
|---|---|---|
| Verbindung II = Metrafenone + Verbindung III = Epoxiconazole 0,25 + 1 ppm Mischung 1 : 4 | 97 | 94 |
| Verbindung II = Metrafenone + Verbindung III = Epoxiconazole 0,06 + 0.25 ppm Mischung 1 : 4 | 94 | 89 |
| Verbindung II = Metrafenone + Verbindung III = Epoxiconazole 0,25 + 0,06 ppm Mischung 4 : 1 | 83 | 67 |
| Verbindung II = Metrafenone + Verbindung III = Epoxiconazole 0,06 + 0,015 ppm Mischung 4 : 1 | 33 | 0 |

Tabelle 8

| **Aus WO 02/062140 bekannte Zweier-Kombination** | **beobachteter Wirkungsgrad** | **Berechneter Wirkungsgrad*)** |
|---|---|---|
| Verbindung I = mit $R_n$ = H + Verbindung 11 = Metrafenone 0,25 + 0,06 ppm Mischung 4 : 1 | 0 | 0 |
| Verbindung I = mit $R_n$ = H + Verbindung II = Metrafenone 0,06 + 0.015 ppm Mischung 4 : 1 | 0 | 0 |
| Verbindung I = mit $R_n$ = H + Verbindung II = Metrafenone 0,25 + 1 ppm Mischung 1 : 4 | 0 | 0 |
| Verbindung I = mit $R_n$= H + Verbindung II = Metrafenone 0,06 + 0,25 ppm Mischung 1 : 4 | 0 | 0 |

Tabelle 9

| Beanspruchte Dreier - Kombinationen | beobachteter Wirkungsgrad | Berechneter Wirkungsgrad*) |
|---|---|---|
| Verbindung I mit $R_n$ = H + Verbindung II = Metrafenone + Verbindung III = Epoxiconazole 0,25 + 0,25 + 1 ppm Mischung 1 : 1 : 4 | 100 | 97 |
| Verbindung I mit $R_n$ = H + Verbindung II = Metrafenone + Verbindung III = Epoxiconazole 0,06 + 0,06 + 0,25 ppm Mischung 1 : 1 : 4 | 100 | 94 |
| Verbindung I mit $R_n$ = H + Verbindung II = Metrafenone + Verbindung III = Epoxiconazole 0,25 + 0,25 + 0,06 ppm Mischung 4 : 4 : 1 | 94 | 83 |
| Verbindung I mit $R_n$ = H + Verbindung II = Metrafenone + Verbindung III = Epoxiconazole 0,06 + 0,06 + 0,015 ppm Mischung 4 : 4 : 1 | 56 | 33 |
| Verbindung I mit $R_n$ = H + Verbindung II = Metrafenone + Verbindung III = Epoxiconazole 0,25 + 0,06 + 0,25 ppm Mischung 4 : 1 : 4 | 100 | 89 |
| Verbindung I mit $R_n$ = H + Verbindung II = Metrafenone + Verbindung III = Epoxiconazole 0,06 + 0,015 + 0,06 ppm Mischung 4 : 1 : 4 | 83 | 67 |
| Verbindung I mit $R_n$ = H + Verbindung II = Metrafenone + Verbindung III = Epoxiconazole 0,25 + 1 + 0,25 ppm Mischung 1 : 4 : 1 | 100 | 89 |
| Verbindung I mit $R_n$ = H + Verbindung II = Metrafenone + Verbindung III = Epoxiconazole 0,06 + 0,25 + 0,06 ppm Mischung 1 : 4 : 1 | 78 | 67 |
| *) berechneter Wirkungsgrad nach der Colby-Formel | | |

Aus den Ergebnissen des Versuches geht hervor, daß der beobachtete Wirkungsgrad in allen Mischungsverhältnissen höher ist, als nach der Colby-Formel vorausberechnete Wirkungsgrad (aus Synerg 188. XLS).

**Patentansprüche**

**1.** Fungizide Mischungen, enthaltend als aktive Komponenten

(1) ein Benzamidoxim-Derivat der Formel I

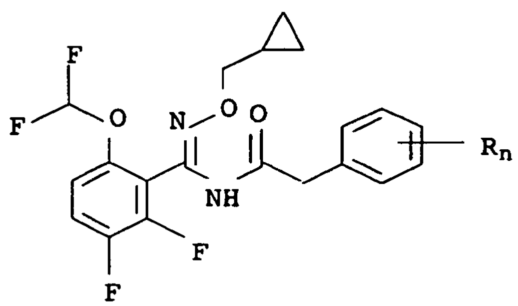

(I)

wobei der Substituent und der Index die folgenden Bedeutungen haben kann:

R Wasserstoff, Halogen, $C_1$-$C_4$-Alkyl, $C_1$-$C_4$-Halogenalkyl, $C_1$-$C_4$-Alkoxy oder $C_1$-$C_4$-Halogenalkoxy

n 1, 2 oder 3,

und
(2) ein Benzophenone der Formel II,

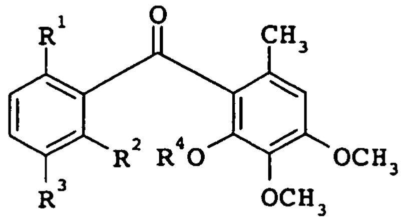

(II)

in der

$R^1$ für Chlor, Methyl, Methoxy, Acetoxy, Pivaloyloxy oder Hydroxy;
$R^2$ für Chlor oder Methyl;
$R^3$ für Wasserstoff, Halogen oder Methyl; und
$R^4$ für $C_1$-$C_6$-Alkyl oder Benzyl stehen, wobei der Phenylteil des Benzylrestes einen Halogen oder Methylsubstituenten tragen kann, und

(3) Epoxiconazol der Formel III

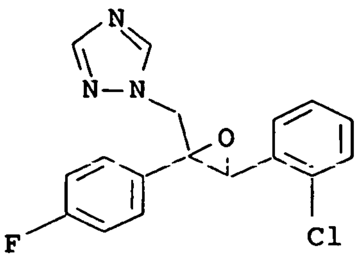

(III)

in einer synergistisch wirksamen Menge.

**2.** Fungizide Mischung nach Anspruch 1, wobei in der Formel I der Rest R für Wasserstoff steht.

**3.** Fungizide Mischungen nach einem der Ansprüche 1 bis 2, wobei in der Formel II

$R^1$ für Methoxy, Acetoxy oder Hydroxy
$R^2$ für Methyl,
$R^3$ für Wasserstoff, Chlor oder Brom, und
$R^4$ für $C_1$-$C_4$-Alkyl steht.

**4.** Fungizide Mischungen nach Anspruch 3, wobei in der Formel II

$_R1$ für Methoxy
$R^2$, $R^4$ für Methyl und
$R^3$ für Brom steht.

**5.** Fungizide Mischung nach Anspruch 1, **dadurch gekennzeichnet, dass** das Gewichtsverhältnis des Benzamidoxim-Derivates der Formel I zu dem Benzophenon der Formel II und dem Epoxiconazol der Formel III 20 : 1 : 1 bis 1 : 20 : 20 beträgt.

**6.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der fungiziden Mischung gemäß Anspruch 1 behandelt.

**7.** Verfahren nach Anspruch 6, **dadurch gekennzeichnet, daß** man die Verbindungen der Formeln I, II und III gemäß Anspruch 1 gleichzeitig, und zwar gemeinsam oder getrennt, oder nacheinander ausbringt.

**8.** Verfahren nach Anspruch 6 oder 7, **dadurch gekennzeichnet, daß** man die fungizide Mischung oder die Verbindungen der Formeln I, II und III in einer Menge von 0,01 bis 8 kg/ha aufwendet.

**9.** Fungizide Mittel, enthaltend die fungizide Mischung gemäß Anspruch 1 sowie einen festen oder flüssigen Träger.

**Claims**

**1.** A fungicidal mixture, comprising as active components

(1) a benzamideoxime derivative of the formula I

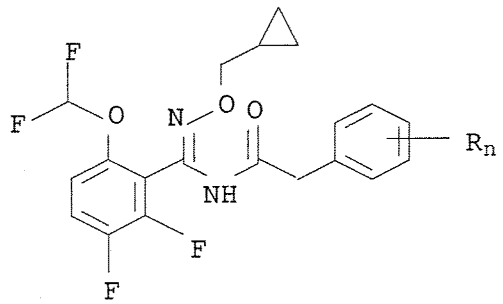

(I)

where the substituent and the index may have the following meanings:

R is hydrogen, halogen, $C_1$-$C_4$-alkyl, $C_1$-$C_4$-haloalkyl, $C_1$-$C_4$-alkoxy or $C_1$-$C_4$-haloalkoxy
n is 1, 2 or 3,

and
(2) a benzophenone of the formula II,

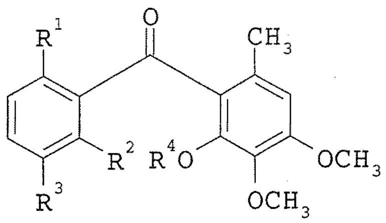

(II)

in which

$R^1$ is chlorine, methyl, methoxy, acetoxy, pivaloyloxy or hydroxyl;
$R^2$ is chlorine or methyl;
$R^3$ is hydrogen, halogen or methyl; and
$R^4$ is $C_1$-$C_6$-alkyl or benzyl, where the phenyl moiety of the benzyl radical may carry a halogen or methyl substituent, and

(3) epoxiconazole of the formula III

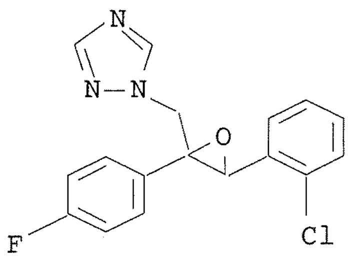

(III)

in a synergistically effective amount.

2. The fungicidal mixture according to claim 1, where the radical R in the formula I is hydrogen.

3. The fungicidal mixture according to claim 2, where in the formula II

   $R^1$ is methoxy, acetoxy or hydroxyl,
   $R^2$ is methyl,
   $R^3$ is hydrogen, chlorine or bromine, and
   $R^4$ is $C_1$-$C_4$-alkyl.

4. The fungicidal mixture according to claim 3, where in the formula II

   $R^1$ is methoxy,
   $R^2$, $R^4$ are methyl and
   $R^3$ is bromine.

5. The fungicidal mixture according to claim 1, where the weight ratio of the benzamideoxime derivative of the formula I to the benzophenone of the formula II and the epoxiconazole of the formula III is from 20 : 1 : 1 to 1 : 20 : 20.

6. A method for controlling harmful fungi, which comprises treating the harmful fungi, their habitat, or the plants, seeds, soils, areas, materials or spaces to be kept free from them with the fungicidal mixture according to claim 1.

7. The method according to claim 6, which comprises applying the compounds of the formulae I, II and III as set forth in claim 1 simultaneously, that is either together or separately, or in succession.

8. The method according to claim 6 or 7, wherein the fungicidal mixture or the compounds of the formulae I, II and III are applied in an amount of from 0.01 to 8 kg/ha.

9. A fungicidal composition, comprising the fungicidal mixture according to claim 1 and a solid or liquid carrier.

**Revendications**

1. Mélanges fongicides, contenant comme composants actifs

   (1) un dérivé de benzamidoxime selon la formule I

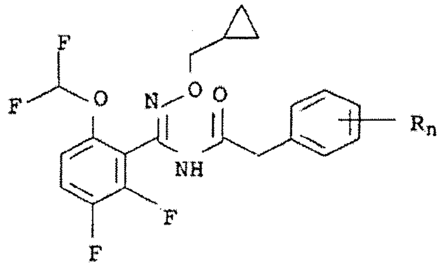

(I)

dans laquelle le substituant et l'indice peuvent avoir les significations suivantes:

R hydrogène, halogène, alcoyle en $C_1$-$C_4$, halogénure d'alcoyle en $C_1$-$C_4$, alcoxy en $C_1$-$C_4$ ou halogénure alcoxy en $C_1$-$C_4$
n 1, 2 ou 3,

et
(2) un benzophénone selon la formule II

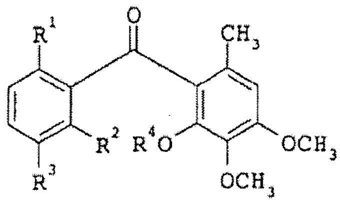

(II)

dans laquelle

$R^1$ est synonyme de chlore, méthyle, méthoxy, acétoxy, pivaloyloxy ou hydroxy;
$R^2$ est synonyme de chlore ou de méthyle ;
$R^3$ est synonyme d'hydrogène, d'halogène ou de méthyle ; et
$R^4$ est synonyme d'alcoyle en $C_1$-$C_6$ ou de benzyle, la partie phényle du radical benzyle pouvant porter un halogène ou des substituants de méthyle, et

(3) un époxyconazol selon la formule III

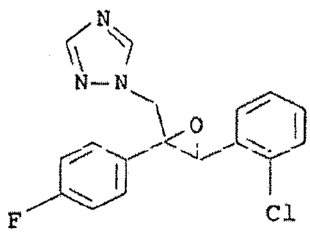

(III)

dans une quantité synergétiquement efficace.

**2.** Mélange fongicide selon la revendication 1, le radical R étant synonyme d'hydrogène dans la formule I.

**3.** Mélanges fongicides selon l'une des revendications 1 à 2, dans lesquels, dans la formule II,

$R^1$ est synonyme de méthoxy, acétoxy ou hydroxy
$R^2$ est synonyme de méthyle
$R^3$ est synonyme d'hydrogène, de chlore ou de brome, et

$R^4$ est synonyme d'alcoyle en $C_1$-$C_4$

**4.** Mélanges fongicides selon la revendication 3, dans lesquels, dans la formule II,

$R^1$ est synonyme de méthoxy
$R^2$, $R^4$ sont synonymes de méthyle et
$R^3$ est synonyme de brome.

**5.** Mélange fongicide selon la revendication 1, **caractérisé en ce que** le rapport pondéral du dérivé de benzamidoxime de la formule I par rapport au benzophénone de la formule II et à l'époxyconazol de la formule III est égal à 20 : 1 : 1 à 1 : 20 : 20.

**6.** Procédé pour la lutte contre les champignons nuisibles, **caractérisé en ce que** l'on traite les champignons nuisibles, leur espace vital ou les plantes, graines, sols, surfaces, matériaux ou locaux qui doivent être maintenus exempts desdits champignons avec le mélange fongicide selon la revendication 1.

**7.** Procédé selon la revendication 6, **caractérisé en ce que** l'on produit les composés des formules I, II et III selon la revendication 1, en même temps, à savoir en commun ou séparément, ou successivement.

**8.** Procédé selon la revendication 6 ou 7, **caractérisé en ce que** l'on applique le mélange fongicide ou les composés des formules I, II et III selon une quantité comprise entre 0,01 et 8 kg/ha.

**9.** Produits fongicides contenant le mélange fongicide selon la revendication 1, de même qu'un support solide ou liquide.